# EUROPEAN PATENT SPECIFICATION

(11) **EP 1 047 900 B1**
(45) Date of publication and mention of the grant of the patent: **24.03.2004**
(21) Application number: 99901019.2
(22) Date of filing: 12.01.1999
(51) Int. Cl.: F16L 58/10

(54) **METHOD OF PROTECTING ARTICLES**
VERFAHREN ZUM SCHUTZ VON GEGENSTAENDEN
PROCEDE DE PROTECTION D'ARTICLES

(30) Priority: 12.01.1998 GB 9800616
(43) Date of publication of application: 02.11.2000
(73) Proprietor: WRC PLC, Marlow, Buckinghamshire SL7 2HD (GB)
(72) Inventor: JONES, Gerald, Melville, Aubrey, Ashton Keynes, Swindon SN6 6PS (GB)
(74) Representative: Curtis, Philip Anthony
(86) International application number: PCT/GB1999/000088
(87) International publication number: WO 1999/035434

(56) References cited:
- AU-A- 4 556 879
- GB-A- 898 124
- US-A- 3 321 357
- US-A- 5 720 834

## Description

This invention relates to a method of protecting articles, such as pipes and fittings, from corrosion, and particularly relates to the corrosion protection of metal articles. The invention also relates to decorative, reflective and/or conductive materials.

The corrosion of metals in waters and soils occurs by an aqueous electrochemical mechanism. That is, it involves the presence of water (or moisture) containing dissolved ions (i.e. a solution) at the metal surface, and the transfer of electrons from the metal surface to the aqueous environment in contact with it. Corrosion protection can be achieved by interfering with one or more of. these processes.

Current corrosion protection systems employ loose polymeric sleeves which suffer from a number of problems such as poor bonding to metallic pipes and damage during handling and during installation by conventional techniques. They are not suitable for installation by trenchless technology..

A flexible protection membrane is disclosed in WO94/04349. In all the embodiments exemplified in WO94/04349, the flexible protective membrane comprises a flexible polymeric sheet having an open-textured surface on both its faces, the open textured surfaces being capable of being impregnated by a cementitious bonding material.

The membrane described in WO94/04349 is inappropriate for some protective applications, owing to the relatively high weight generated by the two cementitious layers. In practice, these two layers are essential in order that the membrane can seal to itself (as the cementitious material is unable to form a good bond with the polymeric flexible sheet).

We have now found a way to solve the problems in the prior art.

According to one aspect of the invention there is provided a method of protecting a metal article from corrosion, said method comprising: applying to an external surface of the article a corrosion protector, the corrosion protector comprising a corrosion resistant flexible film laminated on a single face thereof to a substrate which is permeable to and impregnated with a cementitious material, the cementitious material of the corrosion protector being brought into contact with the article and being allowed to solidify in order to bond the corrosion protector to the article; and (a) sealing an edge portion of the corrosion protector to another edge portion of the same protector, or (b) sealing an edge portion of the corrosion protector to an edge portion of a second corrosion protector.

The invention is particularly suitable for applications where the article is a pipe, and is especially suitable for protecting the outer surface of such pipes. The corrosion protector may be sealed to itself when it is wrapped completely around the circumference of a pipe so that the edge portions of the protector meet along the longitudinal axis of the pipe. The corrosion protector may be sealed to a second corrosion protector when the second corrosion protector is placed next to the first protector along the length of the pipe, or when two or more of the corrosion protectors are required to cover the entire circumference of the pipe. It will be appreciated that each edge portion of each corrosion protector may be sealed to one or more separate further corrosion protectors. For the corrosion protection of pipes, the usual arrangement would be to provide a corrosion protector which was sufficiently large to be wrapped completely around the pipe and to be sealed to itself along the longitudinal axis of the pipe, and to provide a sufficient number of the corrosion protectors along the pipe to protect the desired length of the pipe.

In one preferred embodiment said edge portions of the or each corrosion protector are sealed by butt-jointing the edges, then sealing the edges by adhesive (e.g. glue) or by welding (e.g. heat sealing).

In another preferred embodiment said edge portions of the or each corrosion protector are sealed by butt-jointing the edges, then applying a sealing layer over the or each corrosion protector along said edge portions. The sealing layer may be sealed to the or each corrosion protector by adhesive (e.g. glue) or by welding (e.g. heat sealing).

In another preferred embodiment said edge portions of the or each corrosion protector are sealed by overlapping one of the edge portions over the other of the edge portions, and sealing the edge portions to one another. In this embodiment, at least part of the overlapping edge portion is preferably free of the cementitious material and preferably also free of the substrate, to facilitate bonding to the underlying edge portion. The overlapping edge portion may be sealed to the underlying edge portion by adhesive (e.g. glue) or by welding (e.g. heat sealing).

The corrosion protector may be provided with means to enable a flexible foam or grout to be injected therethrough to provide additional sealing between the corrosion protector and the article. This feature is especially useful at the region of a joint between two articles. The injection means may be, for example, a valve or a grommet.

It is preferred that the corrosion resistant film is substantially impermeable to the corrosive material. In most circumstances, we envisage that the corrosive material will comprise water containing dissolved ions, in which case the corrosion resistant film should be substantially impermeable to water and the ions. Since cement leaches in acidic groundwaters, it is important that the corrosion resistant film is impermeable to the cementitious material.

The film may comprise a single layer or a plurality of layers laminated together. There may be a single oriented layer. There may be a plurality of layers, some or all of which may be oriented - adjacent layers may be oriented in different directions. One or more layers may be biaxially oriented. The film may include adhesive layers for bonding adjacent layers together.

The film may be provided in reinforced form, or in unreinforced form. Reinforcement can be achieved in a number of ways. For example, reinforcement can be achieved by the provision of one or more layers containing fibres, or formed of a woven mesh. Reinforcement may also, or instead, be achieved by orienting one or more layers of the film either monoaxially or biaxially. The film may comprise a plurality of layers, some of which are reinforced and some of which are unreinforced.

The composition of the corrosion resistant film depends upon the nature of the corrosive material and the strength and durability requirements of the film. Films comprising at least one polymeric layer are usually suitable. It is especially preferred that the corrosion resistant film comprises at least one layer of a thermoplastic material. Examples of suitable thermoplastic materials include polyvinylchloride and homopolymers and copolymers of polyolefins such as polyethylene, polypropylene and polybutylene.

The substrate may be any material which is impregnatable with the cementitious material, and is typically a porous material. It will be appreciated that the substrate must be permeable to the cementitious material. The substrate may be capable of absorbing or "sponging up" wet cement, or may be capable of storing dry cement. The substrate may be a woven material, a felt material, a sponge material, or may comprise chopped strands. The substrate may be formed into a mat. It is preferred that the substrate is made of a corrosion resistant material. Particularly suitable materials are polyesters and acrylic polymers, especially acrylic felts.

The cementitious material may be any material capable of being impregnated in the substrate and capable of solidifying to bond the substrate to the article. The cementitious material should not contain any component that is corrosive towards the pipe or other article. Preferably, the cementitious material is alkaline: this improves the corrosion protection, since the cementitious material will be in contact with the article after the corrosion protector has been bonded thereto. The cementitious material may be a cement paste or a cement mortar.

The cementitious material may be in a wet or dry state. However, when the cementitious material is in a dry state it will need wetting prior to application to the pipe or article. Thus, in one embodiment the corrosion protector is impregnated with a dry cementitious material, and is wetted prior to being applied to the article. This has the advantage that, after the dry cementitious material has been impregnated into the substrate, the corrosion protector can readily be stored until it is needed. In this embodiment it is therefore not necessary to have a supply of the cementitious material on site.

In another embodiment, the substrate is impregnated with a wet cementitious material, such as a cementitious grout. In this embodiment, it would normally be necessary to impregnate the substrate with the cementitious material on site

The cementitious material may be a hydraulic cement. The cementitious material may be Portland cement. The cementitious material may be, for example, a calcareous cement, an aluminous cement or a siliceous cement.

The application of sleeves to pipes is described in the Water Industry Information & Guidance Note IGN 4-50-03. June 1996, Issue 1 (ISSN 1353-2529). The corrosion protector may be applied to pipes using techniques described in the document.

For some applications it is desirable for at least part of the surface of the corrosion resistant film opposite to the substrate to be decorative, reflective and/or conductive. This may be achieved by providing a decorative, reflective and/or conductive layer over at least part of said opposite surface. The decorative layer would be provided with the desired decoration, which may be markings containing information.

The present invention provides a quick and easy way to provide articles such as pipes with corrosion protection. The corrosion protection is light, so that it does not have any significant effect on the mechanical properties needed for the article. Furthermore, the external surface of the corrosion protector can be provided in any desired colour, whereby the external surface of the article is provided with that colour.

Furthermore, the invention makes it possible to provide a metal pipe with a relatively low friction external corrosion protector (compared with concrete-coated pipes), because the outer surface of the protector may be a smooth thermoplastic surface. This is of particular importance when the pipe is installed using trenchless technology.

According to another aspect of the invention there is provided a composite pipe comprising an inner metal pipe, and a corrosion protector, the corrosion protector being bonded to an external surface of the inner metal pipe and comprising a corrosion resistant flexible film laminated on a single face thereof to a substrate which is permeable to and impregnated with a cementitious material, the arrangement being such that the film is bonded to the pipe by the cementitious material, and the corrosion resistant film forms an external surface of the pipe, wherein (a) the corrosion protector is sealed to itself along edge portions thereof, and/or (b) an edge portion of the corrosion protector is sealed to an edge portion of an adjacent corrosion protector.

The corrosion protector may have the same features as the corrosion protector described above. In an embodiment, an outer surface of the film, opposite to the substrate, is decorative. In one embodiment, the decorative surface can be provided by laminating a suitably patterned decorative material to the surface of the film opposite to the substrate.

The decorative effect may be achieved by conventional means. For example, the decorative effect may be achieved by incorporating a suitably coloured pigment in the film.

In an embodiment, an outer surface of the film, opposite to the substrate, is reflective. In one embodiment, the reflective surface can be provided by laminating a reflective material to the surface of the film opposite to the substrate.

The reflective effect may be achieved by conventional means. For example, the reflective effect may be achieved by incorporating aluminium into the film

In an embodiment, an outer surface of the film, opposite to the substrate, is conductive. In one embodiment, the conductive surface can be provided by laminating a conductive material to the surface of the film opposite to the substrate.

The conductive effect may be achieved by conventional means. For example, the conductive effect may be achieved by incorporating carbon black into the film.

Any combination of the decorative, reflective and/or conductive effects can be provided on a single material. Thus, in the decorative material, at least part of the surface of the film may reflective and/or conductive. In the reflective material, at least part of the surface of the film may decorative and/or conductive. In the conductive material, at least part of the surface of the film may reflective and/or decorative.

The film of the decorative, reflective and/or conductive material may be a multilayer structure, as described above in respect of the corrosion protector. In general, it will be the outer layer of the film which is at least partially decorative, reflective and/or conductive. However, this is not essential. In some embodiment, it may be an inner layer (including the layer adjacent to the substrate) which is at least partially decorative, reflective and/or conductive - it will be appreciated that this embodiment would be most appropriate for the conductive effect. In one embodiment, an outer layer of the film may be at least partially decorative and/or reflective and an inner layer of the film may be at least partially conductive.

The decorative, reflective and/or conductive material is preferably flexible prior to hardening of the cementitious material.

It is possible for the decorative, reflective and/or conductive material to be applied to metal articles as described above. However, we have found that the use of such materials is an especially convenient way to provide selected decorative, reflective and/or conductive areas on concrete, especially pre-cast concrete. Thus we envisage that the decorative material could be provided on pavements (or sidewalks), highways or buildings to provide required markings, such as markings to convey safety information to the public. The reflective and/or conductive material could also be applied to pavements, highways or buildings in the same way.

Furthermore, the film can be reinforced (as described above) to help with surface crack control in concrete.

According to a further aspect of the invention we provide a precast concrete article having a decorative, reflective and/or conductive area over at least part of the surface thereof, said article comprising a precast concrete member having a decorative, reflective and/or conductive material over at least part of the surface thereof, wherein the decorative, reflective and or conductive material comprises a film having a substrate on one surface thereof, said substrate being permeable to and impregnated with a cementitious material and being bonded to the concrete member, and said film has a decorative, reflective and/or conductive area over at least part of the opposite surface thereof.

The film is a corrosion resistant film as described above, and it is preferably reinforced as described above. The substrate and the cementitious material may be as described above. The decorative, reflective and/or conductive material may be applied to the concrete member using the method described above.

The decorative, reflective and or conductive material can provide a weather resistant barrier coating for the concrete member.

The invention makes it possible to provide an article with any combination of decorative, reflective and conductive effects, and also makes it possible to protect the article from corrosion. An example of one particular application involves use of the conductive material on pipes. The conductive material may be provided on a series of pipes in a pipeline to provide a continuous electrical connection from along the pipeline. By means of this arrangement, the conductive material can be used to detect break in the pipeline (caused by earthquakes, for example) by electrically detecting breaks in the conductive material. This technique may also be used to identify which part of the pipeline which has been broken.

Reference is now made to the accompanying drawings, in which:
Fig. 1 is a cross-sectional view showing the application of a corrosion protector to a flat article;
Fig. 2 is a cross-sectional view showing the application of a corrosion protector to a article in the form of a pipe;
Fig. 3 is a cross-sectional view showing one embodiment of the sealing of two adjacent corrosion protectors;
Fig. 4 is a cross-sectional view showing another embodiment of the sealing of two adjacent corrosion protectors;
Fig. 5 is a cross-sectional view showing another embodiment of the sealing of two adjacent corrosion protectors; and
Fig. 6 is a cross-sectional view showing the sealing of two adjacent corrosion protectors in the region of a pipe joint.

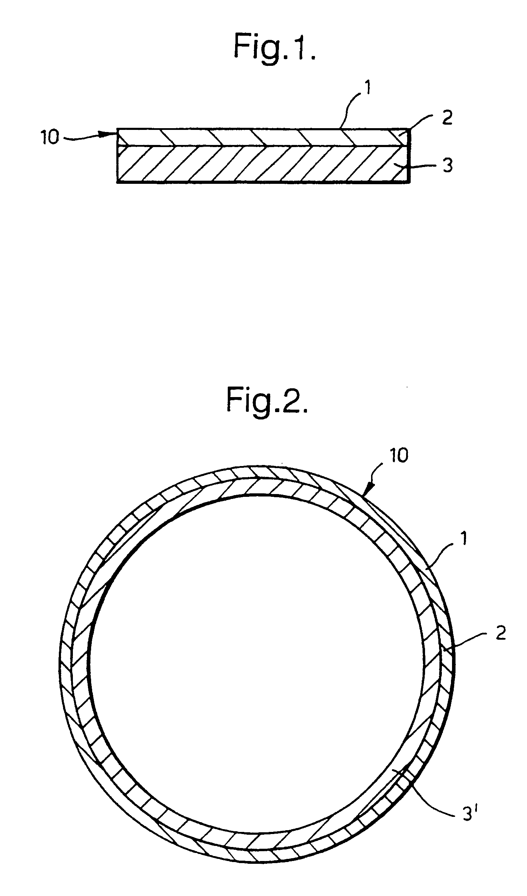

In Fig. 1 a corrosion protector 10 comprises a polymeric film 1 laminated to a permeable substrate 2 made from polyester or acrylic felt. The substrate 2 was impregnated with a cementitious material prior to application to a flat metal article 3.

In Fig. 2 the corrosion protector 10 comprises the polymeric film 1 laminated to the permeable substrate 2. The substrate 2 was impregnated with a cementitious material prior to application to a metal pipe 3'. The corrosion protector 10 in combination with the pipe 3' form a corrosion resistant pipe according to the present invention.

After the substrate 2 has been applied to the article 3 or the pipe 3', the cementitious material cures to bond the corrosion protector to the article 3 or the pipe 3'. The polymeric film 1 protects the pipe 3 and the substrate 2 from damage during handling, and also from the external leaching of the cementitious material by water. The film 1 can be provided in any desired colour (e.g. blue) in order to provide a desired external appearance for the pipe 3.

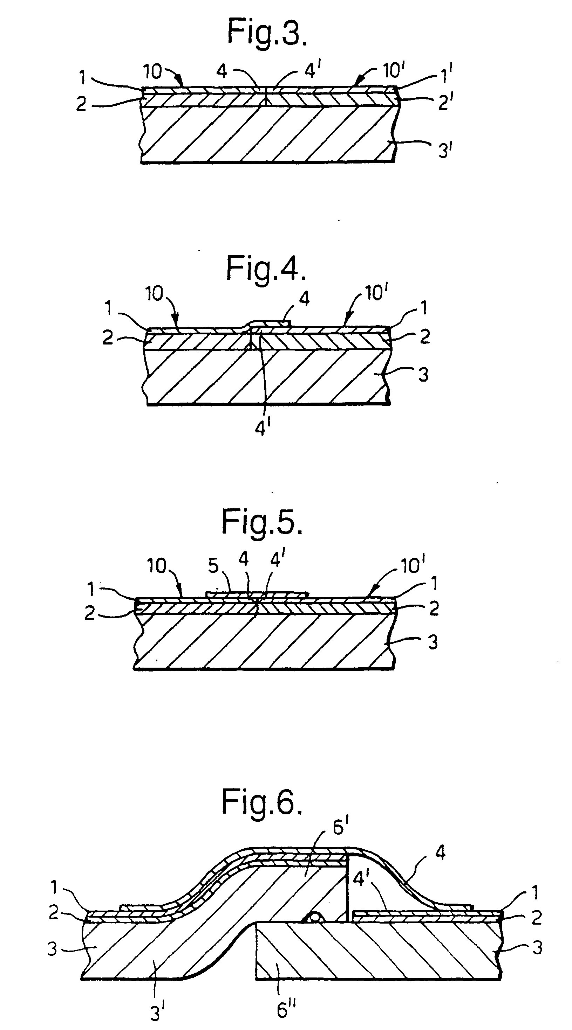

Fig. 3 shows the corrosion protector 10 butt jointed with another corrosion protector 10'. The corrosion protector 10' has substantially the same composition and structure as the corrosion protector 10. The corrosion protectors 10 and 10' have edge portions 4 and 4' respectively which are in engagement with one another and which are sealed together by adhesive or welding.

Fig. 4 shows the corrosion protector 10 overlapping another corrosion protector 10'. The corrosion protector 10' has substantially the same composition and structure as the corrosion protector 10. The corrosion protectors 10 and 10' have edge portions 4 and 4' respectively. The edge portion 4 overlaps the edge portion 4' and is devoid of the substrate and the cementitious material in order to facilitate sealing of the edge portion 4 to the edge portion 4'. This sealing can be achieved by adhesive or welding.

Fig. 5 shows the corrosion protector 10 butt jointed with another corrosion protector 10'. The corrosion protector 10' has substantially the same composition and structure as the corrosion protector 10. The corrosion protectors 10 and 10' have edge portions 4 and 4' respectively which are in engagement with one another. A sealing member 5 overlies the edge portions 4 and 4' and is sealed thereto by adhesive or welding.

Fig. 6 shows the corrosion protector 10 overlapping another corrosion protector 10' in the region of an overlap between two pipes 3' and 3". The corrosion protector 10' has substantially the same composition and structure as the corrosion protector 10. The corrosion protector 10 and 10' have edge portions 4 and 4' respectively. The edge portion 4 overlaps the edge portion 4' and is devoid of the substrate and the cementitious material in order to facilitate sealing of the edge portion 4 to the edge portion 4'. This sealing can be achieved by adhesive or welding. The pipe 3' has a socket 6' which overlaps a spigot 6" of the pipe 3". The edge portion 4 follows the contour of the socket 6'. The edge portion 4' could be provided with a valve or grommet (not shown) to facilitate injection of a flexible foam or grout to further protect the pipe joint.

The surface of the film 1 or 1', opposite to the substrate 2 or 2', may be at least partially decorative, reflective and/or conductive.

It will be appreciated that modifications may be made to the invention described above.

## Claims

1. A method of protecting a metal article from corrosion, said method comprising: applying to an external surface of the article a corrosion protector, the corrosion protector comprising a corrosion resistant flexible film laminated on a single face thereof to a substrate which is permeable to and impregnated with a cementitious material, the cementitious material of the corrosion protector being brought into contact with the article and being allowed to solidify in order to bond the corrosion protector to the article; and (a) sealing an edge portion of the corrosion protector to another edge portion of the same protector, or (b) sealing an edge portion of the corrosion protector to an edge portion of a second corrosion protector.

2. A method according to claim 1, wherein the corrosion protector is applied to the outer surface of a metal pipe.

3. A method according to claim 1 or 2, wherein said edge portions of the or each corrosion protector are sealed by butt-jointing the edges, then sealing the edges.

4. A method according to claim 1 or 2, wherein said edge portions of the or each corrosion protector are sealed by butt-jointing the edges, then applying a sealing layer over the or each corrosion protector along said edge portions, then sealing the sealing layer to the or each corrosion protector.

5. A method according to claim 1 or 2, wherein said edge portions of the or each corrosion protector are sealed by overlapping one of the edge portions over the other of the edge portions, and sealing the edge portions to one another, and wherein at least part of the overlapping edge portion is free of the cementitious material and the substrate, to facilitate bonding to the underlying edge portion.

6. A method according to any preceding claim, wherein the film includes at least one oriented layer.

7. A method according to any preceding claim, wherein the film includes at least one reinforced layer.

8. A method according to any preceding claim, wherein the film comprises a polymeric material.

9. A method according to any preceding claim, wherein the film comprises a thermoplastic material.

10. A method according to any preceding claim, wherein at least part of the surface of the corrosion resistant film opposite to the substrate is decorative, reflective and/or conductive.

11. A method according to any preceding claim, wherein the corrosion protector is provided with means to enable a flexible foam or grout to be injected therethrough to provide additional sealing between the corrosion protector and the article.

12. A composite pipe comprising an inner metal pipe, and a corrosion protector, the corrosion protector being bonded to an external surface of the inner metal pipe and comprising a corrosion resistant flexible film laminated on a single face thereof to a substrate which is permeable to and impregnated with a cementitious material, the arrangement being such that the film is bonded to the pipe by the cementitious material, and the corrosion resistant film forms an external surface of the pipe, wherein (a) the corrosion protector is sealed to itself along edge portions thereof, or (b) an edge portion of the corrosion protector is sealed to an edge portion of an adjacent corrosion protector.

13. A pipe according to claim 12, wherein at least part of the film is reflective, conductive or decorative.

14. A pipe according to claim 13, wherein at least part of the film is reflective, and it is the outer surface of the film, opposite to the substrate, which is at least partially reflective.

15. A pipe according to claim 13, wherein at least part of the film is conductive, and it is the outer surface of the film, opposite to the substrate, which is at least partially conductive.

16. A pipe according to claim 13, wherein at least part of the film is decorative, and it is the outer surface of the film, opposite to the substrate, which is at least partially decorative.

17. A pipe according to any one of claims 13 to 16, wherein the film includes at least one reinforced layer.

18. A pipe according to any one of claims 13 to 17, wherein the film comprises a polymeric material.

19. A pipe according to any one of claims 13 to 18, wherein the film comprises a thermoplastic material.

20. A precast concrete article having a corrosion resistant film having a substrate laminated on a single face thereof, said substrate being permeable to and impregnated with a hardenable cementitious material and being bonded to the concrete member, and said corrosion resistant film having a decorative, reflective and/or conductive area over at least part of the opposite surface thereof.

21. An article according to claim 20, wherein the film includes at least one reinforced layer.

22. An article according to claim 20 or 21, wherein the film comprises a polymeric material.

23. An article according to claim 20, 21 or 22, wherein the film comprises a thermoplastic material.

## Patentansprüche

1. Verfahren zum Schützen eines Metallartikels vor Korrosion, wobei das genannte Verfahren die folgenden Schritte umfasst: Aufbringen eines Korrosionsschutzes auf eine Außenfläche des Artikels, wobei der Korrosionsschutz eine korrosionsbeständige flexible Folie umfasst, von der eine einzige Fläche auf ein Substrat laminiert wird, das für zementartiges Material durchlässig und damit imprägniert ist, wobei das zementartige Material des Korrosionsschutzes mit dem Artikel in Kontakt gebracht und erhärten gelassen wird, so dass es den Korrosionsschutz auf den Artikel bondet, und (a) Vergießen eines Randabschnitts des Korrosionsschutzes mit einem anderen Randabschnitt desselben Schutzes, oder (b) Vergießen eines Randabschnitts des Korrosionsschutzes mit einem Randabschnitt eines zweiten Korrosionsschutzes.

2. Verfahren nach Anspruch 1, bei dem der Korrosionsschutz auf die Außenfläche eines Metallrohrs aufgebracht wird.

3. Verfahren nach Anspruch 1 oder 2, bei dem die genannten Randabschnitte des oder jedes Korrosionsschutzes durch Stumpfverbinden der Ränder und anschließendes Vergießen der Ränder vergossen werden.

4. Verfahren nach Anspruch 1 oder 2, bei dem die genannten Randabschnitte des oder jedes Korrosionsschutzes durch Stumpfverbinden der Ränder, dann Aufbringen einer Vergussschicht auf den oder jeden Korrosionsschutz entlang des genannten Randabschnitts und dann Vergießen der Vergussschicht mit dem oder jedem Korrosionsschutz vergossen werden.

5. Verfahren nach Anspruch 1 oder 2, bei dem die genannten Randabschnitte des oder jedes Korrosionsschutzes durch Überlappen eines der Randabschnitte über die anderen Randabschnitte und Vergießen der Randabschnitte miteinander vergossen werden, und wobei wenigstens ein Teil des überlappenden Randabschnitts frei von dem zementartigen Material und dem Substrat ist, um die Bindung mit dem darunter liegenden Randabschnitt zu erleichtern.

6. Verfahren nach einem der vorherigen Ansprüche, bei dem die Folie wenigstens eine ausgerichtete Schicht aufweist.

7. Verfahren nach einem der vorherigen Ansprüche, bei dem die Folie wenigstens eine verstärkte Schicht aufweist.

8. Verfahren nach einem der vorherigen Ansprüche, bei dem die Folie ein polymeres Material umfasst.

9. Verfahren nach einem der vorherigen Ansprüche, bei dem die Folie ein Thermoplastmaterial umfasst.

10. Verfahren nach einem der vorherigen Ansprüche, bei dem wenigstens ein Teil der Oberfläche der korrosionsbeständigen Folie gegenüber dem Substrat dekorativ, reflexionsfähig und/oder leitend ist.

11. Verfahren nach einem der vorherigen Ansprüche, bei dem der Korrosionsschutz mit Mitteln versehen ist, um zu ermöglichen, dass ein flexibler/s Schaumstoff oder Vergussmittel durch ihn injiziert wird, um einen zusätzlichen Verguss zwischen Korrosionsschutz und Artikel zu erzielen.

12. Verbundrohr, umfassend ein inneres Metallrohr und einen Korrosionsschutz, wobei der Korrosionsschutz auf eine Außenfläche des inneren Metallrohrs gebondet ist, und umfassend eine korrosionsbeständige flexible Folie, von der eine einzige Fläche auf ein Substrat laminiert ist, das für zementartiges Material durchlässig und damit imprägniert ist, wobei die Anordnung derart ist, dass die Folie mit dem zementartigen Material auf das Rohr gebondet wird und die korrosionsbeständige Folie eine Außenfläche des Rohres bildet, wobei (a) der Korrosionsschutz entlang eines Randabschnitts davon mit sich selbst vergossen wird, oder (b) ein Randabschnitt des Korrosionsschutzes mit einem Randabschnitt eines benachbarten Korrosionsschutzes vergossen wird.

13. Rohr nach Anspruch 12, bei dem wenigstens ein Teil der Folie reflexionsfähig, leitend oder dekorativ ist.

14. Rohr nach Anspruch 13, bei dem wenigstens ein Teil der Folie reflexionsfähig ist und bei dem der wenigstens teilweise reflexionsfähige Teil die Außenfläche der Folie gegenüber dem Substrat ist.

15. Rohr nach Anspruch 13, bei dem wenigstens ein Teil der Folie leitend ist und bei dem der wenigstens teilweise leitende Teil die Außenfläche der Folie gegenüber dem Substrat ist.

16. Rohr nach Anspruch 13, bei dem wenigstens ein Teil der Folie dekorativ ist und bei dem der wenigstens teilweise dekorative Teil die Außenfläche des Films gegenüber dem Substrat ist.

17. Rohr nach einem der Ansprüche 13 bis 16, bei dem die Folie wenigstens eine verstärkte Schicht aufweist.

18. Rohr nach einem der Ansprüche 13 bis 17, bei dem die Folie ein polymeres Material aufweist.

19. Rohr nach einem der Ansprüche 13 bis 18, bei dem die Folie ein Thermoplastmaterial aufweist.

20. Vorgefertigter Betonartikel mit einer korrosionsbeständigen Folie mit einem Substrat, das auf eine einzige Fläche davon laminiert ist, wobei das genannte Substrat für härtbares zementartiges Material durchlässig und damit imprägniert ist und auf das Betonelement gebondet ist, und wobei die genannte korrosionsbeständige Folie einen dekorativen, reflexionsfähigen und/oder leitenden Bereich über wenigstens einem Teil der gegenüberliegenden Oberfläche davon hat.

21. Artikel nach Anspruch 20, bei dem die Folie wenigstens eine verstärkte Schicht aufweist.

22. Artikel nach Anspruch 20 oder 21, bei dem die Folie ein polymeres Material aufweist.

23. Artikel nach Anspruch 20, 21 oder 22, bei dem die Folie ein Thermoplastmaterial aufweist.

## Revendications

1. Procédé de protection d'un article métallique contre la corrosion, ledit procédé comprenant : l'application sur une surface extérieure de l'article d'un protecteur anticorrosion, le protecteur anticorrosion comprenant une pellicule flexible résistante à la corrosion dont une seule face est laminée sur un substrat qui est perméable à et imprégné d'un matériau à base de ciment, le matériau à base de ciment du protecteur anticorrosion étant mis en contact avec l'article et se solidifiant pour coller le protecteur anticorrosion à l'article ; et (a) le scellage d'une partie de bord du protecteur anticorrosion à une autre partie de bord du même protecteur, ou (b) le scellage d'une partie de bord du protecteur anticorrosion à une partie de bord d'un second protecteur anticorrosion.

2. Procédé selon la revendication 1, dans lequel le protecteur anticorrosion est appliqué à la surface extérieure d'un tuyau métallique.

3. Procédé selon la revendication 1 ou 2, dans lequel lesdites parties de bords du ou de chaque protecteur anticorrosion sont scellées par aboutement des bords, puis scellage des bords.

4. Procédé selon la revendication 1 ou 2, dans lequel lesdites parties de bords du ou de chaque protecteur anticorrosion sont scellées par aboutement des bords, puis application d'une couche de scellage par-dessus le ou chaque protecteur anticorrosion le long desdites parties de bords, puis scellage de ladite couche de scellage sur le ou chaque protecteur anticorrosion.

5. Procédé selon la revendication 1 ou 2, dans lequel lesdites parties de bords du ou de chaque protecteur anticorrosion sont scellées par recouvrement d'une des parties de bord sur l'autre des parties de bords et scellage des parties de bords l'une à l'autre, et dans lequel au moins une partie de la partie de bord sus-jacente est exempte du matériau à base de ciment et du substrat, pour faciliter le collage à la partie de bord sous-jacente.

6. Procédé selon l'une quelconque des revendications précédentes, dans lequel la pellicule comporte au moins une couche orientée.

7. Procédé selon l'une quelconque des revendications précédentes, dans lequel la pellicule comprend au moins une couche renforcée.

8. Procédé selon l'une quelconque des revendications précédentes, dans lequel la pellicule comprend un matériau polymère.

9. Procédé selon l'une quelconque des revendications précédentes, dans lequel la pellicule comprend un matériau thermoplastique.

10. Procédé selon l'une quelconque des revendications précédentes, dans lequel au moins une partie de la surface de la pellicule résistante à la corrosion opposée au substrat est décorative, réfléchissante et/ou conductrice.

11. Procédé selon l'une quelconque des revendications précédentes, dans lequel le protecteur anticorrosion est doté d'un moyen permettant l'injection d'une mousse flexible ou d'un coulis à travers ledit protecteur afin d'offrir un supplément d'étanchéité entre le protecteur anticorrosion et l'article.

12. Tuyau composite comprenant un tuyau métallique intérieur et un protecteur anticorrosion, le protecteur anticorrosion étant collé à une surface extérieure du tuyau métallique intérieur et comprenant une pellicule flexible résistante à la corrosion laminée sur une seule de ses faces à un substrat qui est perméable à et imprégné d'un matériau à base de ciment, l'agencement étant tel que la pellicule est collée au tuyau par le matériau à base de ciment, et la pellicule résistante à la corrosion forme une surface extérieure du tuyau, dans lequel (a) le protecteur anticorrosion est scellé à lui-même le long de ses propres parties de bords, ou (b) une partie de bord du protecteur anticorrosion est scellée à une partie de bord d'un protecteur anticorrosion adjacent.

13. Tuyau selon la revendication 12, dans lequel au moins une partie de la pellicule est réfléchissante, conductrice ou décorative.

14. Tuyau selon la revendication 13, dans lequel au moins une partie de la pellicule est réfléchissante, et c'est la surface extérieure de la pellicule, opposée au substrat, qui est au moins partiellement réfléchissante.

15. Tuyau selon la revendication 13, dans lequel au moins une partie de la pellicule est conductrice, et c'est la surface extérieure de la pellicule, opposée au substrat, qui est au moins partiellement conductrice.

16. Tuyau selon la revendication 13, dans lequel au moins une partie de la pellicule est décorative, et c'est la surface extérieure de la pellicule, opposée au substrat, qui est au.moins partiellement décorative.

17. Tuyau selon l'une quelconque des revendications 13 à 16, dans lequel la pellicule comporte au moins une couche renforcée.

18. Tuyau selon l'une quelconque des revendications 13 à 17, dans lequel la pellicule comporte au moins un matériau polymère.

19. Tuyau selon l'une quelconque des revendications 13 à 18, dans lequel la pellicule comporte un matériau thermoplastique.

20. Article en béton manufacturé comportant une pellicule résistante à la corrosion ayant un substrat laminé sur une seule de ses faces, ledit substrat étant perméable à et imprégné d'un matériau durcissable à base de ciment et étant collé à l'élément en béton, et ladite pellicule résistante à la corrosion ayant une surface décorative, réfléchissante et/ou conductrice sur au moins une partie de sa surface opposée.

21. Article selon la revendication 20, dans lequel la pellicule comporte au moins une couche renforcée.

22. Article selon la revendication 20 ou 21, dans lequel la pellicule comporte un matériau polymère.

23. Article selon la revendication 20, 21 ou 22, dans lequel la pellicule comporte un matériau thermoplastique.
